# EUROPÄISCHE PATENTSCHRIFT

(11) **EP 0 460 541 B1**
(45) Veröffentlichungstag und Bekanntmachung des Hinweises auf die Patenterteilung: **15.11.1995**
(21) Anmeldenummer: 91108914.2
(22) Anmeldetag: 31.05.1991
(51) Int. Cl.: C08L 25/06

(54) **Thermoplastische Formmassen**
Thermoplastic moulding compositions
Masses de moulage thermoplastiques

(30) Priorität: 07.06.1990 DE 4018230
(43) Veröffentlichungstag der Anmeldung: 11.12.1991
(73) Patentinhaber: BASF Aktiengesellschaft, 67063 Ludwigshafen (DE)
(72) Erfinder: Blumenstein, Uwe, Dr., W-6700 Ludwigshafen (DE); Klaerner, Peter, Dr., W-6719 Battenberg (DE); Schuch, Horst, Dr., W-6804 Ilvesheim (DE); Walter, Hans-Michael, Dr., W-6713 Freinsheim (DE)

(56) Entgegenhaltungen:
- EP-A- 0 052 732
- US-A- 4 146 589
- PATENT ABSTRACTS OF JAPAN vol. 13, no. 24 (C-561)(3372) 19. Januar 1989

## Beschreibung

Die Erfindung betrifft hochschlagfeste thermoplastische Formmassen, die im wesentlichen Polystyrol als Matrix und in dieser Matrix gleichmäßig verteilt kautschukartige, eine Weichphase bildende Teilchen unterschiedlicher mittlerer Teilchengröße in unterschiedlichen Mengen enthalten; die nachstehend interessierende Weichphase ist im wesentlichen aus Polybutadien oder Blockpolymerisaten aus Butadien und Styrol aufgebaut. Auf solche, Polystyrol und eine Weichphase enthaltende Formmassen beziehen sich die folgenden Patentschriften:
(1) DE 26 20 579
(2) DE 26 03 289
(3) US 4 146 589
(4) EP 48 389
(5) US 4 785 051
(6) EP-A-52 732
Aus (3) bzw. (1) ist bekannt, Styrolpolymerisate mit hohem Glanz herzustellen, sowie durch eine breite oder bimodale Teilchenverteilung ein gutes mechanisches Niveau bei solchen Styrolpolymerisaten zu erzielen. Weiterhin ist aus (4) bekannt, beide Eigenschaften miteinander zu kombinieren, indem eine bimodale Teilchengrößenverteilung zusammen mit einer bestimmten Teilchenmorphologie bei den kleineren Teilchen eingestellt wird.

In (5) wird ein Styrolpolymerisat beschrieben, das aus einem in Masse hergestellten, schlagzähen Polystyrol mit großen Kautschukteilchen (Zellenteilchen) besteht, dem ein agglomerierter Emulsionspfropfkautschuk zugesetzt wurde. Durch die Agglomeration des Latex entsteht eine bimodale Teilchengrößenverteilung. Zusammen mit dem großteiligen Ausgangsprodukt liegt in der Gesamtmischung eine trimodale Teilchengrößenverteilung vor. Eine Formmasse mit trimodaler Teilchengrözenverteilung der Kautschukteilchen ist aus (b) bekannt.

Eine trimodale Mischung dieser Art führt gegenüber dem in Masse hergestellten unimodalen Produkt einerseits zu erheblich schlechteren Fließeigenschaften und andererseits zu Verbesserungen des mechanischen Niveaus, was aber vor allem auf den hohen Polybutadiengehalt zurückzuführen ist, der sich auf diese Weise ergibt (s. Composition 3 und 7 in (5). Gegenüber bimodalen Produkten weisen die trimodalen keine Verbesserung auf (s. Composition 9 und 10, sowie 11 und 12 in (5)). Zudem ist das Verfahren, verglichen mit der reinen Massepolymerisation, durch die Herstellung und Aufarbeitung des Emulsionspfropfkautschuks sehr aufwendig.

Außerdem besitzt ein Emulsionspfropfkautschuk bekanntlich eine weitaus geringere Kautschukeffizienz als Kautschukteilchen, die während einer Massepolymerisation entstehen, da letztere außer einer in situ oder durch Verwendung von Polystyrol-Polybutadien-Blockautschuk erzeugten Pfropfhülle typischerweise noch große Mengen an inkludiertem Polystyrol enthalten. Wie bekannt ist, ist für die Schlagzähigkeit von Polystyrol nicht alleine der Kautschukgehalt entscheidend, sondern vor allen Dingen auch der Kautschukvolumenanteil, der bei größerer Kautschukeffizienz der Teilchen mit geringeren Kautschukmengen zu erreichen ist (s. dazu S.G. Turley und H.Keskkula, Polymer 21, 466-468 (1980); C.B.Bucknall, "Toughened Plastics", Applied Science Publishers, London (1977)).

Nachteilig ist außerdem bei der Emulsionspolymerisation das Einschleppen von Emulgatoren in das Endprodukt, was Farbe, Klarheit, Ultraviolett- und Oxidationsempfindlichkeit negativ beeinflussen kann. Dazu kommt noch eine gegenüber der Massepolymerisation erhöhte Umweltbelastung durch das bei der Herstellung anfallende, kontaminierte Wasser.

Aufgabe der Erfindung war es, die noch unzureichende Schlagzähigkeit bei gutem Glanz, wie sie entsprechend (4) erhalten werden kann, zu verbessern, ohne den Glanz zu beeinträchtigen. Es wurde gefunden, daß die Einstellung einer bestimmten trimodalen Kautschukteilchengrößenverteilung zu Produkten führt, deren Schlagzähigkeit deutlich über der liegt, die Produkte bimodaler Teilchengrößenverteilung (entsprechend (4)) aufweisen. Diese Steigerung wird nicht auf Kosten des Glanzes erzielt; aufgrund der besonderen Morphologiekomposition wird auch mit geringem Anteil an Kapselteilchen-Produkten ein günstigeres Glanz-Ergebnis erzielt als mit der üblichen bimodalen Teilchengrößenverteilung.

Unmittelbarer Erfindungsgegenstand ist eine thermoplastische Formmasse, enthaltend - bezogen auf die Summe aus A und B
A: 75 bis 97 Gew.-% eines Polystyrols A als Hartmatrix
B: 3 bis 25 Gew.-% eines teilchenförmigen, kautschukelastischen (Co)polymerisats B auf der Grundlage im wesentlichen von Butadien oder dessen Copolymerisaten, seinerseits bestehend aus - bezogen auf B -
   B1: 40 bis 98 Gew.-% (Co)polymerisat B1 mit einer mittleren Teilchengröße von 100 bis 600 nm
   B2: 2 bis 60 Gew.-% einer Teilchenmischung B2, die ihrerseits aufgebaut ist aus - bezogen auf B2 -
      B21: 1 bis 60 Gew.-% (Co)polymerisat B21 mit einer mittleren Teilchengröße von 200 bis 1200 nm und
      B22: 40 bis 99 Gew.-% (Co)polymerisat B22 mit einer mittleren Teilchengröße von 1200 bis 8000 nm
wobei das (Co)polymerisat B1 eine Kapselteilchenmorphologie und die (Co)polymerisate B21 und B22 eine Zellen- und/oder Knäuelteilchenmorphologie aufweisen.

Das erfindungsgemäße Produkt kann aus Anteilen von handelsüblichen, mittels Massepolymerisation hergestellten schlagfesten Polystyrolsorten bestehen, die auf einfache Weise mittels gängiger Methoden gemischt worden sind.

Die erfindungsgemäße Formmasse enthält somit als Komponente A das (ungepfropfte) Polystyrol, das bei der Herstellung der Formmasse auf kontinuierlichem Wege durch Polymerisation in Gegenwart von kautschukartigen Polymerisaten erzeugt wird bzw. sich durch das Mischen von Schmelzen oder das Auflösen und Eindampfen dreier bereits schlagfester Polystyrolharze, die gegebenenfalls im Handel erhältlich sein können, ergibt.

Die meist angewandten Verfahren zur Herstellung von Styrolpolymerisaten sind die Polymerisation in Masse oder Lösung, wie sie beispielsweise in der US-PS 2 694 692 und in H. Gerrens, Chem. Ing. Tech. 52 (1980), 477 beschrieben ist.

Als Kautschuk bei schlagfest modifiziertem Polystyrol wird ein für die Schlagzähmodifizierung von Styrolpolymerisaten gebräuchlicher natürlicher oder synthetischer Kautschuk eingesetzt. Geeignete Kautschuke im Sinne der Erfindung sind, außer Naturkautschuk, z.B. Polybutadien, Polyisopren und Mischpolymerisate des Butadiens und/oder Isoprens mit Styrol und anderen Comonomeren, die eine Glastemperatur unter -20°C (nach K. H. Illers und H. Breuer, Kolloidzeitschrift 176 (1961) S. 110) besitzen. Besonders eignen sich Butadienpolymerisate mit einem 1,4-cis-Gehalt, der zwischen 25 und 99 Gew.-% liegt. Es können aber auch Acrylatkautschuke, EPDM-, Polybutylen- und Polyoctenamerkautschuke eingesetzt werden.

Die Menge des Kautschuks - bezogen auf die Formmasse aus A und B - soll 3 bis 25 Gew.-% (also etwa bis zu 30 %, bezogen auf die Hartmatrix), insbesondere 5 bis 15 Gew.-% ausmachen. Im Falle eines Copolymeren bezieht sich dies auf den Dien-Anteil, wie er durch Bestimmung der Menge an Doppelbindungen z.B. mit Hilfe von Jod ermittelt werden kann.

Das kautschukartige (Co)-Polymerisat B1 soll eine sogenannte Kapselteilchenmorphologie aufweisen. Es ist bekannt, was unter einer solchen Morphologie zu verstehen ist und wie diese im einzelnen erzeugt wird (vgl. Angew. Makromolekulare Chemie 58/59, 175-198 (1977)). Zum Aufbau der Kapselteilchenmorphologie der Komponente B1 der erfindungsgemäßen Formmassen können Polybutadien oder Blockcopolymerisate aus Styrol und Butadien in üblichen Grenzen der Zusammensetzung eingesetzt werden. Wichtig ist lediglich, daß man anhand einiger orientierender Versuche unter Probenahme während der für die Ausbildung der Morphologie entscheidenden Phase der Vorpolymerisation die Polymerisationsbedingungen festlegt.

Die (Co)-Polymerisate B21 und B22 weisen eine vom schlagfesten Polystyrol her bekannte übliche Zellenteilchenmorphologie auf oder es wird so gearbeitet, daß eine Knäuelteilchenmorphologie vorliegt. Die Herstellung von kautschukartigen Polymerisaten mit Knäuelteilchenmorphologie ist aus der oben zitierten Literaturstelle (Angew. Makromolekulare Chemie 58/59, 175-198 (1977)) ohne weiteres möglich.

Die erfindungsgemäße Formmasse kann zusätzlich zu den Komponenten A und B zur weiteren Verbesserung der Eigenschaften als Komponente C Zusatzstoffe enthalten, wie sie für derartige Polymerisate üblich und gebräuchlich sind, z.B. Füllstoffe, Antioxidantien, Farbstoffe, UV-Stabilisatoren, Verarbeitungshilfsmittel oder Flammschutzmittel. Die Zusatzstoffe werden in üblichen Mengen angewendet.

Die Herstellung der erfindungsgemäßen Formmassen ist einfach. So ist es möglich, die erfindungsgemäße Formmasse durch Mischen dreier schlagfester Polystyrole, die jeweils Polystyrol als Matrix und die kautschukartigen Polymerisate B1, B21 und B22 enthalten, und Aufschmelzen zu mischen. Derselbe Vorgang kann in Lösung unter anschließender Entgasung durchgeführt werden.Es ist gleichermaßen möglich, drei verschiedene Pfropfpolymerisate in einem kontinuierlichen Verfahren herzustellen, die Vorpolymerisation mit der Einstellung der Teilchengröße und der Morphologie der Teilchen separat durchzuführen und danach die beiden Vorpolymerisate in bestimmten Verhältnissen zusammenzuführen und die Polymerisation dann gemeinsam bis zu dem angestrebten hohen Feststoffgehalt von z.B. 80 oder 90 % durchzuführen.

Die erfindungsgemäßen Formmassen lassen sich nach den für die Thermoplastverarbeitung üblichen Verfahren, wie Extrusion und Spritzgießen, zu den verschiedenartigsten Formteilen verarbeiten.

### Beispiele

In den nachstehenden Beispielen werden erfindungsgemäße Formmassen mit nicht erfindungsgemäßen bzw. mit den zugrundeliegenden schlagzähen Polystyrolsorten des Handels verglichen.

Hergestellt wurden die Formmassen durch Schmelzemischungen. Jeweils etwa 4,5 kg wurden auf einem Extruder der Firma Werner & Pfleiderer, Modell ZSK 30 bei 250°C Massetemperatur hergestellt. Aus den durch Extrusion hergestellten Produkten wurden Prüfkörper bei 280°C spritzgegossen und daran folgende Kennzahlen bestimmt - in Klammern die in den Tabellen verwendeten Abkürzungen:
1. Durchstoßversuche nach DIN 53 443 an gespritzten Rundscheiben (60 x 2 mm), angegeben ist die Gesamtschädigungsarbeit (W_{ges}) in Nm.
2. Der Glanz wurde mit einem Labor-Reflektometer (Firma Dr. Lange) nach DIN 67 530 bei 60° gemessen. Angegeben ist der Reflektometerwert in Skalenteilen.

Zur Herstellung der erfindungsgemäßen und der nicht erfindungsgemäßen Formmassen wurden folgende Komponenten verwendet.
SB1 Ein schlagzähes Polystyrol des Handels mit 9 % Polybutadien, einer VZ (0.5%ig in Toluol bei 23°C) von 76 ml/g, einem MVI (200/5) von 4.3 cm³/10 min., einer Kapselteilchenmorphologie und einem d₅₀-Wert der integralen Volumenverteilung von 0.28 µm.
SB2 Ein schlagzähiges Polystyrol des Handels mit 8 % Polybutadien, einer VZ (0.5%ig in Toluol bei 23°C) von 73 ml/g, einem MVI (200/5) von 6.2 cm³/10 min., einer Zellenteilchenmorphologie und einem d₅₀-Wert der integralen Volumenverteilung von 0.7 µm.
SB3 Ein schlagzähiges Polystyrol des Handels mit 8 % Polybutadien, einer VZ (0.5%ig in Toluol bei 23°C) von 70 ml/g, einem MVI (200/5) von 5.5 cm³/10 min., einer Zellenteilchenmorphologie und einem d₅₀-Wert der integralen Volumenverteilung von 2.7 µm.

### Beispiel 1, erfindungsgemäß

Dieses Beispiel zeigt den überproportional großen Anstieg der Schlagzähigkeit (gemessen als Durchstoßarbeit) der erfindungsgemäßen Formmassen mit trimodaler Kautschukteilchengrößenverteilung gegenüber den nicht erfindungsgemäßen. Auch fällt der Glanz mit abnehmendem Anteil an Kapselteilchenprodukt im erfindungsgemäßen Anspruchsbereich nur unwesentlich ab.

| SB1 [Gew.-%] | SB2 [Gew.-%] | SB3 [Gew.-%] | W_{ges} [Nm] | Glanz [Skt.] |
|---|---|---|---|---|
| 100* | - | - | 7,1 | 63,5 |
| 95 | 2,5 | 2,5 | 16,7 | 63,6 |
| 90 | 5,0 | 5,0 | 20,2 | 63,1 |
| 80 | 10 | 10 | 17,3 | 63,8 |
| 60 | 20 | 20 | 12,7 | 62,5 |
| 40 | 30 | 30 | 12,4 | 62,1 |
| -* | - | 100 | 8,8 | 50,9 |

| | | | | |
|---|---|---|---|---|
| * nicht erfindungsgemäß | | | | |

### Vergleichsversuch

Dieser Versuch zeigt die Unterlegenheit von Formmassen mit nur bimodaler Teilchengrößenverteilung gegenüber trimodalen (vgl. Beispiel 1). Das Schlagzähigkeitsniveau ist deutlich niedriger und der Glanzabfall beginnt bereits bei höherem Anteil an Kapselteilchenprodukt.

| SB1 [Gew.-%] | SB2 [Gew.-%] | SB3 [Gew.-%] | W_{ges} [Nm] | Glanz [Skt.] |
|---|---|---|---|---|
| 100* | - | - | 7,1 | 63,5 |
| 95* | - | 5,0 | 13,6 | 62,1 |
| 90* | - | 10 | 14,6 | 61,9 |
| 80* | - | 20 | 14,8 | 61,6 |
| | - | 100 | 8,8 | 50,9 |

## Patentansprüche

1. Thermoplastische Formmasse, enthaltend - bezogen auf die Summe aus A und B
A: 75 bis 97 Gew.-% eines Polystyrols A als Hartmatrix
B: 3 bis 25 Gew.-% eines teilchenförmigen, kautschukelastischen (Co)polymerisats B auf der Grundlage im wesentlichen von Butadien oder dessen Copolymerisaten, seinerseits bestehend aus - bezogen auf B -
B1: 40 bis 98 Gew.-% (Co)polymerisat B1 mit einer mittleren Teilchengröße von 100 bis 600 nm
B2: 2 bis 60 Gew.-% einer Teilchenmischung B2, die ihrerseits aufgebaut ist aus - bezogen auf B2 -
B21: 1 bis 60 Gew.-% (Co)polymerisat B21 mit einer mittleren Teilchengröße von 200 bis 1200 nm und
B22: 40 bis 99 Gew.-% (Co)polymerisat B22 mit einer mittleren Teilchengröße von 1200 bis 8000 nm
wobei das (Co)polymerisat B1 eine Kapselteilchenmorphologie und die (Co)polymerisate B21 und B22 eine Zellen- und/oder Knäuelteilchenmorphologie aufweisen.

## Claims

1. A thermoplastic molding material containing, based on the sum of A and B,
A: from 75 to 97% by weight of a polystyrene A as a hard matrix and
B: from 3 to 25% by weight of a particulate, elastomeric (co)polymer B based essentially on butadiene or its copolymers, in turn consisting of, based on B,
B1: from 40 to 98% by weight of a (co)polymer B1 having a mean particle size of from 100 to 600 nm and
B2: from 2 to 60% by weight of a particle blend B2 which in turn consists of, based on B2,
B21: from 1 to 60% by weight of a (co)polymer B21 having a mean particle size of from 200 to 1,200 nm and
B22: from 40 to 99% by weight of a (co)polymer B22 having a mean particle size of from 1,200 to 8,000 nm,
(co)polymer B1 having an encapsulated-particle morphology and (co)polymers B21 and B22 having a cellular - and/or coiled - particle morphology.

## Revendications

1. Masse de moulage thermoplastique contenant, par rapport à la somme de A et de B,
A : 75 à 97 % en poids d'un polystyrène A en tant que matrice rigide
B : 3 à 25 % en poids d'un (co)polymère particulaire caoutchouteux B essentiellement à base de butadiène ou de ses copolymères, constitué de son côté, par rapport à B, de
B1: 40 à 98 % en poids de (co)polymère B1 avec une granulométrie moyenne de 100 à 600 nm
B2 : 2 à 60 % en poids d'une composition particulaire B2, qui est formée de son côté, par rapport à B2, de
B21 : 1 à 60 % en poids de (co)polymère B21 avec une granulométrie moyenne de 200 à 1.200 nm et
B22 : 40 à 99 % en poids de (co)polymère B22 avec une granulométrie moyenne de 1.200 à 8.000 nm
où le (co)polymère B1 présente une morphologie de particules encapsulées et les (co)polymères B21 et B22 une morphologie particulaire cellulaire et/ou en pelote.
